# EUROPEAN PATENT APPLICATION

(11) **EP 1 595 619 A1**
(43) Date of publication of application: **16.11.2005**
(21) Application number: 04704764.2
(22) Date of filing: 23.01.2004
(51) Int. Cl.: B22C 7/02, B22C 9/04, B22C 9/10, B29C 39/26, B29C 39/10

(54) **METHOD FOR INTEGRALLY FORMING RESIN MODEL**

(30) Priority: 10.02.2003 JP 2003032018
(71) Applicant: Shonan Design Co., Ltd., Sagamihara-shi, Kanagawa-ken 2291132 (JP)
(72) Inventor: SUZUKI, Hidekazu;, chome Sagamihara-shi Kanagawa 2291132; (JP); TANAKA, Nobuyuki;, chome Sagamihara-shi Kanagawa 2291132; (JP); MIKI, Noriyuki;, chome Sagamihara-shi Kanagawa 2291132; (JP); YOKOI, Hiroshi;, chome Sagamihara-shi Kanagawa 2291132; (JP); ONSO, Keiichiro;, chome Sagamihara-shi Kanagawa 2291132; (JP); MATSUYAMA, Reiji;, chome Sagamihara-shi Kanagawa 2291132; (JP); KASUGA, Tomonobu;, chome Sagamihara-shi Kanagawa 2291132; (JP); MIZUNO, Hisashi;, chome Sagamihara-shi Kanagawa 2291132; (JP); MAEDA, Manabu;, chome Sagamihara-shi Kanagawa 2291132; (JP); TAKASE, Akira;, chome Sagamihara-shi Kanagawa 2291132; (JP); OI, Takaharu;, chome Sagamihara-shi Kanagawa 2291132; (JP); SUZUKI,Tomomi;, chome Sagamihara-shi Kanagawa 2291132; (JP); MATSUMURA, Minoru;, chome Sagamihara-shi Kanagawa 2291132; (JP); AIHARA, Toshiyuki;, chome Sagamihara-shi Kanagawa 2291132; (JP); TAKEMURA, Masashi;, chome Sagamihara-shi Kanagawa 2291132; (JP); KITA, Taro;, chome Sagamihara-shi Kanagawa 2291132; (JP); SAITO, Akio;, chome Sagamihara-shi Kanagawa 2291132; (JP); KAMATA, Kazuki;, chome Sagamihara-shi Kanagawa 2291132; (JP); KIKUCHIHARA, Masato;, chome Sagamihara-shi Kanagawa 2291132; (JP)
(74) Representative: Häckel, Stefan
(86) International application number: PCT/JP2004/000604
(87) International publication number: WO 2004/069447

(57) **Abstract**

The present invention comprises a process for combining foamed polystyrene fine particles (C) to two-component reaction curing type soft urethane liquid resin (A), injecting a resulting mixture into a mold for core (C) with a concave portion corresponding to said hollow portion, hardening it, removing a resulting cured matter from said mold for core (C), and forming a vanishing core (D) having a shape corresponding to said hollow portion; a process for setting said vanishing core (D) at a specific position inside a mold for resin model (E) having a concave portion corresponding to an outer shape of said resin model, injecting two-component reaction fast curing type urethane liquid resin (F), hardening it, removing a resulting cured matter, and forming a resin model (G) including said vanishing core (D); and a process for injecting organic solvent capable of dissolving foamed polystyrene (H) into said vanishing core (D of said resin model (G) to dissolve said foamed polystyrene fine particles (B), removing a resulting solution, taking out and removing a cured matter (I) of said two-component reaction curing type soft urethane liquid resin (A), and completing said resin model.

## Description

### TECHNICAL FIELD

The present invention relates to a method for integrally forming a complicated shaped resin model using a special core and a lost-wax precision casting using the resin model.

### BACKGROUND

When we explain a related art for molding complicated shaped matters, we explain firstly about a related art for molding a typical hollow shaped integral molding because there are various complicated shaped matters. Various methods were thought out as thus methods in the past.

Ancient people formed pots as pot-shaped hollow integral moldings by piling up or winding up a string-shaped clay like a snake's coil continuously. An artist produces an integral molding with a hollow portion by hollowing out the inside of it by means of a chisel or a plane.

In manufacturing, there is a method such that: under a high temperature condition for holding a melted state, a melted glass material is got on a top of a blowing pipe, entered into a segment die, foamed like a balloon by pouring air into it from the end of the blowing pipe, and pressed to a side surface of the segment die by air pressure, resulting that decrease of the temperature of the melted glass material is promoted, rapidly changing to a condition such as to lose flowability and maintain a set-up shape, separating the segment die and taking out a hollow molding. Currently, thus method is achieved by an automatic successive manufacturing, so that the same shaped hollow glass productions are mass produced.

In a plastic field, a blow forming that air is poured into a thermoplastic sheet cylinder softened by heat to stick the thermoplastic sheet cylinder to an inner surface of a segment die and cool down it to be set, and then the segment die is separated to take out a hollow molding is industrialized, resulting that a large number of hollow plastic containers are mass produced. Besides, hollow moldings are formed by that: thermoplastic resin powder is poured from an opening of a heating die into the die, increasing temperature of the die to melt the thermoplastic resin powder contacting to an inner surface of the die to form a thermoplastic resin layer, cooling down the die and the thermoplastic resin layer stuck to the inner surface of the die to maintain its shape, removing the remaining non-melted thermoplastic resin power from the opening of the die, taking out the thermoplastic resin sheet from the opening of the die, expanding the resin sheet taken out by air pressure. For instance, character's masks as thus hollow moldings can be seamlessly formed by painting them. This is a slush molding. This is a method that a property such as to be elastically restored to an original shape after taking out from the opening of the die because the formed thermoplastic resin has rubber elasticity is used well.

Recently, as an optical molding method is established, so that complicated shaped matters are produced easily. Namely the optical molding method is that photo-setting resin is coated like a thin film on a substrate, energy beams (light) controlled by a computer are radiated to the thin film shaped photo-setting resin on the substrate to set it, repeating coating the photo-setting resin thereon like a thin film and radiating the energy beams, so that thin film setting layers can be piled up in turn. Complicated shaped moldings can be produced by changing a radiation area of the energy beams based on digital data in turn. Hollow matters can be produced as well.

In a casting field, it is cultivated since early times that hollow castings are produced by setting up a core in a mold, pouring melted metal into a space between the mold and the core, standing to cool, breaking and removing the molding and the core to take them out. This method is a splendid method for producing hollow shaped integral moldings. Besides, there is a full mold method that a model is produced with foamed polystyrene, it is embedded into a sand-mold, melted metal is poured into it, and the foamed polystyrene is melted by heat to flow out or burn out for removing it. In this process, the hollow moldings are not produced, but if the foamed polystyrene is regarded to be equivalent to air, the sand-mold can be regarded to the hollow integral molding.

Furthermore, in a precision casting field by a lost-wax method, a fire-proof coating layer is provided on a surface of a wax model, a dewaxing process at 100 to 150 °C is provided to melt and remove a wax ingredient, and a burning process at 1000 °C is provided to burn the fire-proof coating layer, resulting that strength of a mold can be increased and a residual wax ingredient can be burned out and removed completely. Thus, a hollow mold is produced, a melted light-alloy is poured into the hollow mold, and a complicated precision casting product is produced by breaking and removing the mold after cooling. A precision casting product as an end product is not always a hollow integral molding, but the mold is a hollow integral molding. Besides, there is a producing mold method that a model is produced with polyethylene glycol which may be a aqueous wax ingredient instead of a wax ingredient, and a removing PEG process is provided to wash away and remove it by water or organic solvent.

In powder metallurgy field, a powder lamination molding method that, by using a principle of an optical molding method, energy beams are radiated to fine thermoplastic resin particles or fine metal powder coated with thermoplastic resin to laminate is appeared, and a lot of technologies for forming hollow models with complicated shape are appeared.

For producing many integral moldings with complicated shape, it is a basic system that a complicated shaped integral molding model is copied by a mold. For producing many integral molding models with special complicated shape, a system that a core is inserted into a mold, a molding material is poured into the mold to hold its shape, and then the core is removed to integrally mold many models with hollow complicated shape is the most available. A material of the core is air, sand connected by binder, resin powder which has bad thermal conductivity, foamed resin which is contracted and liquefied by heat to flow out, wax which is liquefied easily by heat to flow out, or polyethylene glycol which can be washed out by water. Namely, the core is removed by a method such as removal by breakdown, removal by flowing out, removal by contraction, removal by burning out and gasifying, removal by solution and cleaning, and so on.

An ultimate purpose of the present invention is to gain a lot of integral precision moldings with complicated shape. Molding methods so as to mold integrally models with hollow complicated shape similar to the present invention are as follows. For instance, JP 2002-66689 A discloses a method that: a model which is made mainly of synthetic resin which is soluble in a solvent, the model is embedded into a mold due to an investment method or a ceramic mold method, the mold is soaked in the solvent for part of the mold to be dissolved or softened, a gap between the model and the mold is formed, a model is burned out with the mold at high temperature, and the model is vanished out.

Furthermore, JP 11-123723 A discloses a method that a core is formed with a foamed material of polymer compound, an unvulcanized rubber container is formed around the core, and then the rubber container is heated and vulcanized, and volume of the core is decreased because of melting the polymer foamed material or the core is dissolved by organic solvent and remove-d.

Besides, JP 8-30333 B discloses a method for producing powder molding product characterized in that a process for providing a core made of a foamed material which can be contracted and vanished by heating, a process for gaining a molding by arranging the core in a mold and pouring a molding material which is formed by compounding a powder material and a binder, and a process for vanishing the core by heating the molding integral with the core.

Recently, as technology makes remarkable progress, technical demand becomes high level and complicated. In a precision molding field, serious dimensional accuracy is required in precision molding products and products with very complicated shape are increased. Moreover, in precision molding parts for industrial use, complicated shapes with section thickness not more than 1mm are required. In order to gain thus precision moldings, a model with complicated shape having a thin portion with high dimensional accuracy is necessary, but prior wax models can not satisfy the above mentioned requirements at the moment.

A problem to be solved by the present invention is how a model with complicated shape having a thin portion with high dimensional accuracy is produced.

Next, detail of the problem is explained.

To gain precision molding products with complicated shape, many models with complicated shape must be produced. It is impossible to make a model with a thin portion because strength of materials in prior wax models is low. Especially, a wax model with section thickness not more than 1mm is produced difficultly because deformation, cracking, or rupture is occurred at removing mold. Even if the model can be produced, there is a fundamental problem such that the production of the mold can be achieved because deformation, cracking, or rupture is occurred at operation such as conservation, movement or fire-proof coating.

In the case of complicated shape models, there are many various kinds of complication such as a shape with a complicated hollow portion, an uneven shape with a plural opening portions, a shape with thick portions and thin portions and so on. It is not difficult that parts divided from the complicated product are produced respectively and then the produced parts are assembled integrally by lamination to produce a model. However, in case of requiring dimensional accuracy of the finished model or finished profile irregularity of contacting portions, the above mentioned system integrated by lamination can not be responded.

It is difficult to use a model produced integrally in an optical molding method or powder lamination molding method instead of a wax model for a lost-wax precision molding method because dimensional accuracy and finished profile irregularity becomes bad according that marks laminated like stairsteps lie scattered in whole surface of the model. A system that a model by the lamination method and polished in whole to increase profile irregularity is used as a master model to shift to a reproduction process is available. A mold is necessary in order to produce many complicated models which are formed integrally in a manner such that a model with complicated shape by the lamination method is polished in its whole surface to increase its profile irregularity is shift to the reproduction process as a master model. It is not easy to detach the integral formed model with complicated shape from the mold. Even if draft angle is provided on it, the mold is a rubber mold with excellent elasticity, or the mold is a partition type mold, it is impossible to detach the complicated shaped model with partial hollow portions and/or uneven portions from the mold. Accordingly, in the above method, a system providing a vanishing core is a general method. It is required to the vanishing core that the core can be removed easily without giving any damage to a model. Namely, there is a problem that it must be established to a removing method which is available to components constituting of the core.

There is an additional problem that a resin model with complicated shape as an alternative of a wax model must have a dewaxing feature as well as the wax model, can be detached from a mold even if thickness thereof is not more than 1 mm, and must have components which are possible to make many copies easily.

Thus problems are considered assiduously and a system to be resolved the problems totally is found, resulting the present invention.

Accordingly, the present invention is to provided a method for integrally forming a resin model with complicated shape and a complicated hollow portion inside thereof.

### DISCLOSURE OF THE INVENTION

Therefore, the present invention is a method for integrally forming a resin model with complicated shape having a complicated hollow portion inside thereof: a process in which a vanishing core (D) having a shape corresponding to the hollow portion is formed by mixing foamed polystyrene fine particles (B) with a two-component reaction curing type soft urethane liquid resin (A), by injecting the resultant mixture into a mold (C) for a core having a concave portion corresponding to the hollow portion, by removing it from the mold (C) after hardening; a process in which a resin model (G) including the vanishing core (D) is formed by setting the vanishing core (D) at a specific position in a mold (E) for the resin model having a convex portion corresponding to an outer shape of the resin model, by injecting a two-component reaction fast curing type urethane liquid resin (F) into the mold (E), and by removing if from the mold (E) after hardening; and a process in which the resin model is completed by injecting an organic solvent (H) capable of dissolving the foamed polystyrene into the vanishing core (D) in the resin model (G) to dissolve the foamed polystyrene fine particles (B) and remove the organic solvent (H), and by taking out a cured matter (I) of the two-component reaction curing type soft urethane liquid resin (A) and removing it.

It is preferred that two-component reaction curing type soft urethane liquid resin (A) consists of a polyol component (a) and a polyisocyanate component (b) and contains 0.01 to 5.0 wt% of the organic solvent (H) capable of dissolving the foamed polystyrene, and hardness of the cured matter (I) is within 50 to 90 in Shore hardness A.

Furthermore, it is preferred that the foamed polystyrene fine particles (B) are formed from wastes of foamed polystyrene products, diameters of the particles are within 0.01 to 5.0 mm and loading of it is within 0.1 to 5.0 wt% relative to the two-component reaction curing type soft urethane liquid resin (A).

Moreover, it is preferred that the two-component reaction fast curing type urethane liquid resin (F) consists of multi-functional polyol component (c), multi-functional polyisocyanate component (d), a plasticizer (e) and wax solid minute particles (f), wherein the plasticizer (e) is micro-dispersed through phase separation when it is hardened rapidly.

Besides, the resin model is preferably used as alternative of a wax model for a lost wax precision molding.

### BRIEF DESCRIPTION OF THE DRAWINGS

FIG. 1A and FIG. 1B are perspective views showing one example of a precision molding with complicated shape having a hollow portion which is an end product or a resin model for the precision molding;
FIG. 2A is a plan view showing one example of the resin model, FIG. 2B is a left side view of it, FIG. 2C is a front view of it, FIG. 2D is a right side view of it, and FIG. 2E is a bottom view of it;
FIG. 3 is a plan view showing one example of a vanishing core, FIG. 3B is a left side view of it, FIG. 3C is a front view of it, FIG. 3D is a right side view of it, and FIG. 3E is a bottom view of it;
FIG. 4A is a plan view showing one example of a master model for forming a mold (E) for a resin model, FIG. 4B is a left side view of it, FIG. 4C is a front view of it, FIG. 4D is a right side view of it, and FIG. 4E is a bottom view of it;
FIG. 5A is a plan view showing a condition of attaching a plate to the vanishing core model for forming a partition portion, FIG. 5B is a left side view of it, FIG. 5C is a front view of it, FIG. 5D is a right side view of it, and FIG. 5E is a bottom view of it;

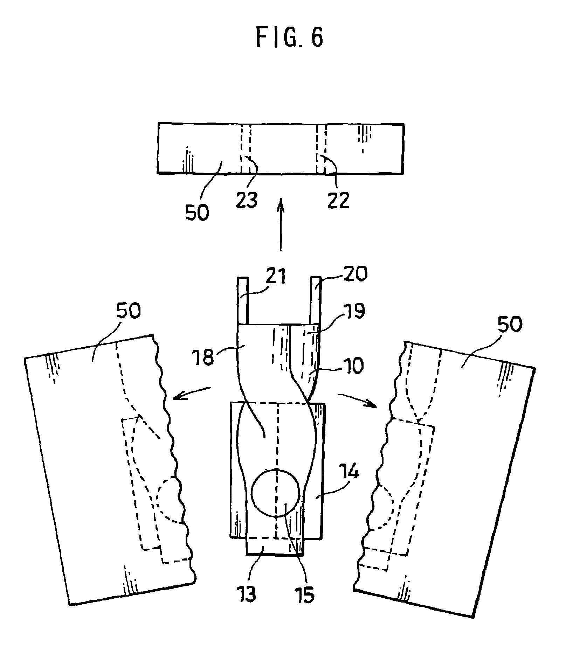

FIG. 6 is a schematic diagram showing a condition of forming a mold for a core;
FIG. 7 is a schematic diagram showing a process for forming a vanishing core;
FIG. 8 is a cross sectional view showing the vanishing core;
FIG. 9 is a schematic diagram showing a condition of forming a mold for the resin model;
FIG. 10A and FIG. 10B are schematic diagrams showing a condition of setting the vanishing core in the mold for the resin model;

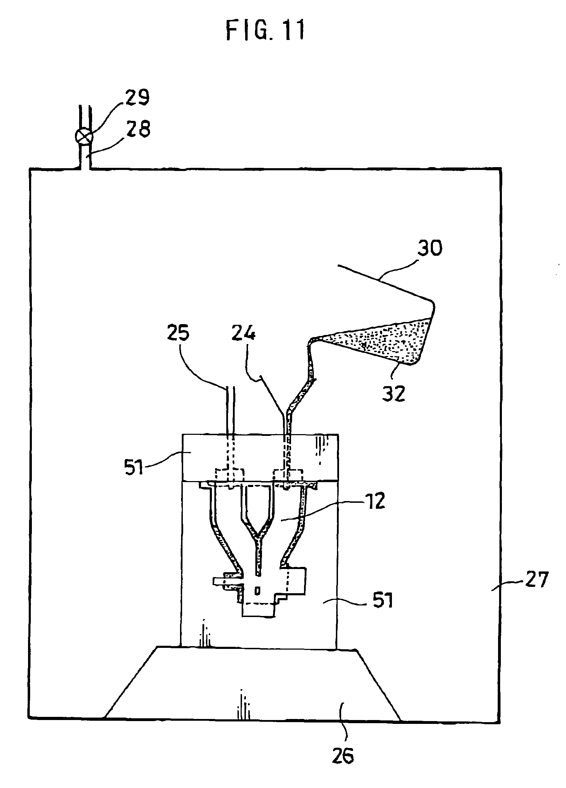

FIG. 11 is a schematic diagram showing a process for injecting an agent into the mold for the resin model in which the vanishing core is set;
FIG. 12 is a schematic diagram showing a process for injecting an organic solvent capable to dissolve foamed polystyrene into the vanishing core; and
FIG. 13 is a schematic diagram showing a process for taking out a curing product of a two-component reaction curing type sot urethane liquid resin remained therein to remove.

### BEST MODE FOR CARRYING OUT THE INVENTION

Hereinafter, best modes for carrying out the invention are explained by referring the drawings.

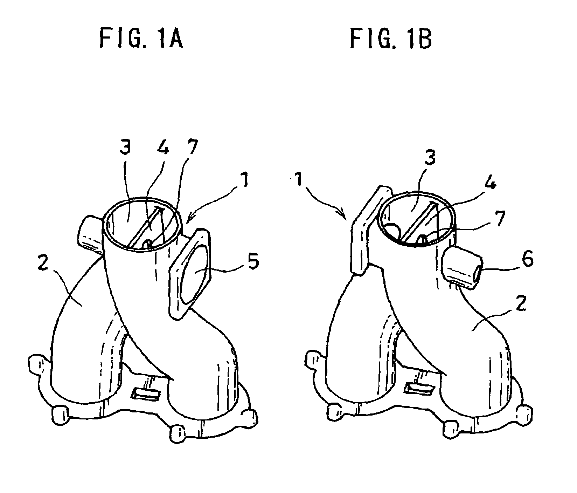

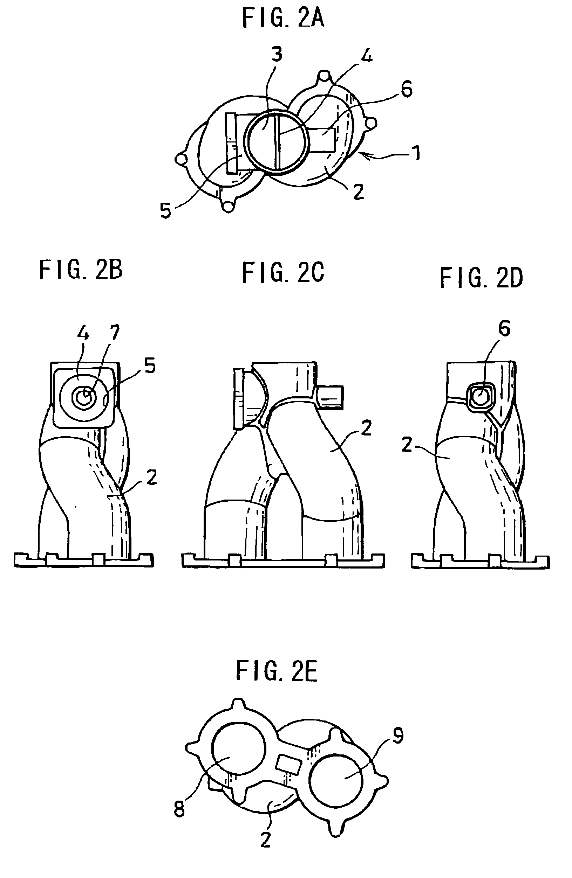

FIG. 1A and FIG. 1B are perspective views of a precision molding with complicated shape having a hollow portion as an end product or a resin model (G) 1 for producing the precision molding, FIG. 2A is a plan view thereof, FIG. 2B is a left side view thereof, FIG. 2C is a front view, FIG. 2D is a right side view thereof, and FIG. 2E is a bottom view thereof. For instance, the resin model (G) 1 has an outer portion 2 with complicated shape and a hollow portion 3 with complicated shape which is divided by a partition portion 4. Besides, plural openings 5, 6, 8, 9 are opened on the outer portion 2 and an opening 7 is also formed in the partition portion 4.

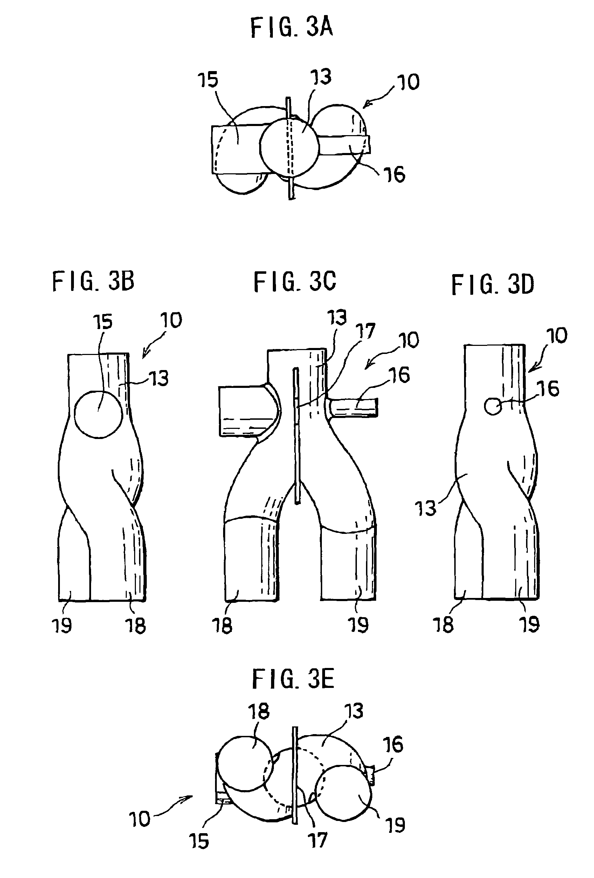

FIGs. 3A to 3E show a vanishing core model 10 formed corresponding to the hollow portion 3. The vanishing core model 10 is constituted of a hollow main body portion 13 corresponding to the hollow portion 3, a portion 15 corresponding to the opening 5, a portion 16 corresponding to the opening 6, a portion 18 corresponding to the opening 8, a portion 19 corresponding to the opening 9 and a portion 17 corresponding to the opening 7 opened in the partition portion 4. Besides, the vanishing core model 10 is formed by carrying out abrasive finishing after forming by an optical molding method.

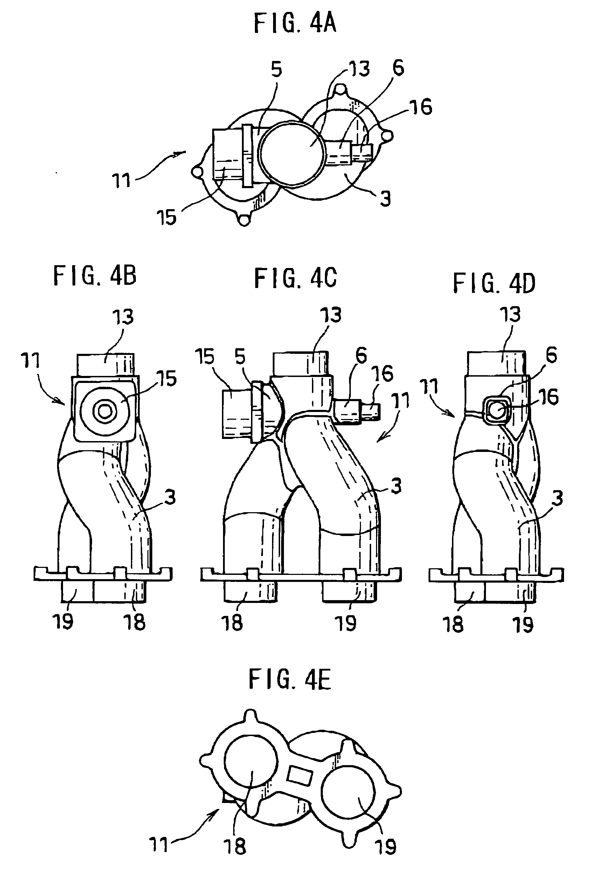

FIGs. 4A to 4E show a master model 11 for forming a mold for a resin model (E) 51. The master model 11 is a shape so as to have combined the resin model (G) 1 and the vanishing core model 10. Note that the explanation is omitted by marking the same symbols to places corresponding to the resin model 1 and the vanishing core model 10. Besides, the master model 11 is formed by carrying out abrasive finishing after forming by an optical molding method.

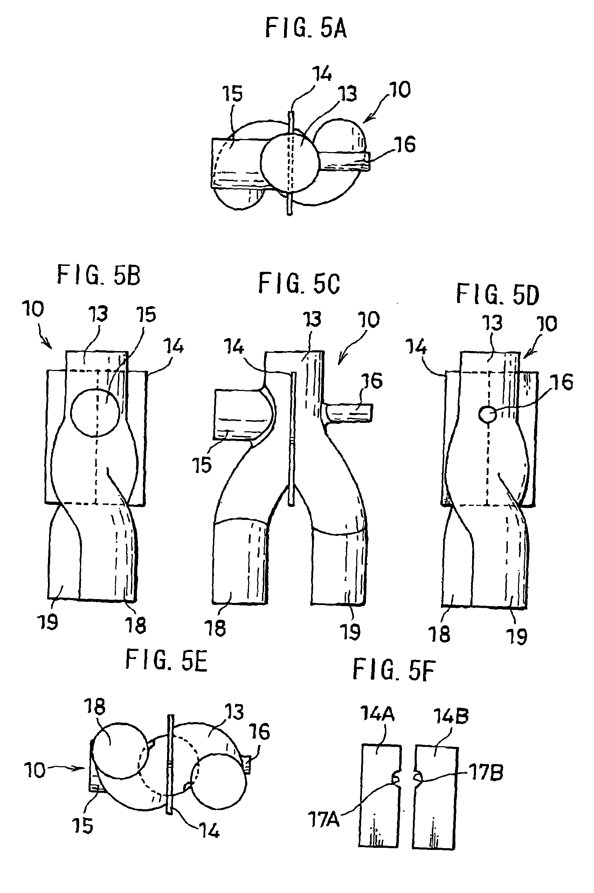

In this working mode, in order to form the vanishing core (D) 12, as shown in FIGs. 5A to 5E, a plate 14 for forming the partition portion 4 is installed to the vanishing core model 10. The plate 14 is, as shown in FIG. 5F, constituted of a pair of pates 14A and 14b, and has concave portions 17A and 17B engaged into a part which is the opening 7.

Rods 20, 21 for forming a sprue gate 22 and a bleeder 23 are installed on the vanishing core model 10 on which the plate 14 is installed, and silicon is injected around the vanishing core model 10 and is harden to form a mold for core (C) 50. In this working mode, the mold for core (C) 50 is divided to three portions such as a cover portion and both side surface portions to take out the vanishing more model 10.

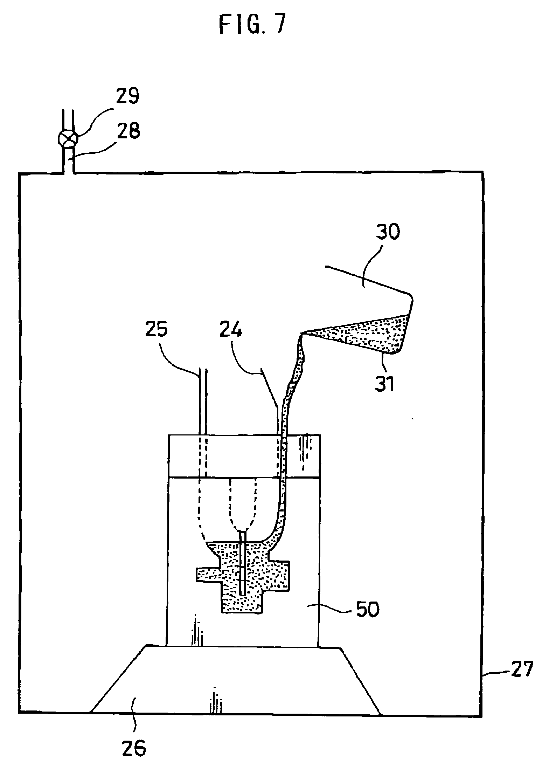

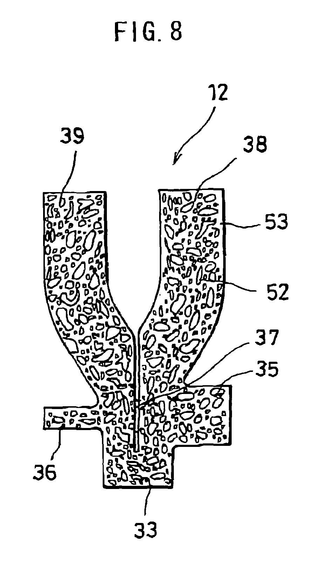

The mold for core (C) 50 is reconstructed and set on a pedestal 26 in a vacuum chamber 27 as shown in FIG. 7. A mixture 31 formed by mixing foamed polystyrene fine particles (B) to a two-component reaction curing type soft urethane liquid resin (A) in a container 30 is injected into a hollow portion in the mold for core (C) 50 via a funnel 24. At this time, air in the vacuum chamber 27 is discharged via an outlet 28 opened/closed by a valve 29. Thus, because air in the hollow portion of the mold for core (C) 50 is discharged from a bleeder 25, the mixture is spread all over the mold for core (C) 50 to be hardened. Then, the vanishing core (D) 12 as shown in FIG. 8 is gained by taking out the mold for more (C) 50 from the vacuum chamber 27 and breaking up the mold for core (C) 50.

Besides, the vanishing more (D) 12 as shown in FIG. 8 comprises a vanishing core main body portion 33 corresponding to the hollow portion 3, a portion 35 corresponding to the opening 5, a portion 36 corresponding to the opening 6, a portion 38 corresponding to the opening 8, a portion 39 corresponding to the opening 9 and a portion 37 corresponding to the opening 7 opened on the partition portion 4, and is constituted of the foamed polystyrene fine particles (B) and a cured matter (I) 53 of the two-component reaction curing type soft urethane liquid resin (A).

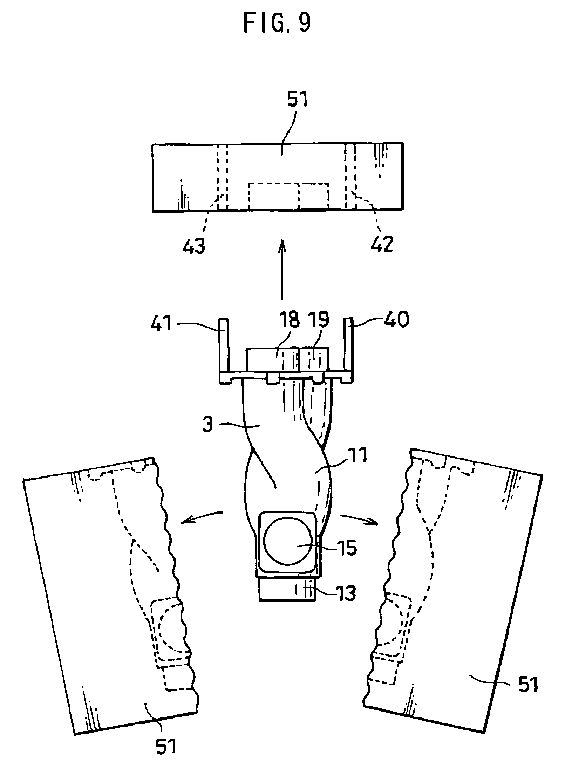

Next, rods 40, 41 for forming a sprue gate 42 and a bleeder 43 are installed on the master model 11 for forming the mold for resin model (E) 51 as shown in FIG. 5, silicon is injected around the master model 11 to be hardened to form the mold for resin model (E) as shown in FIG. 9.

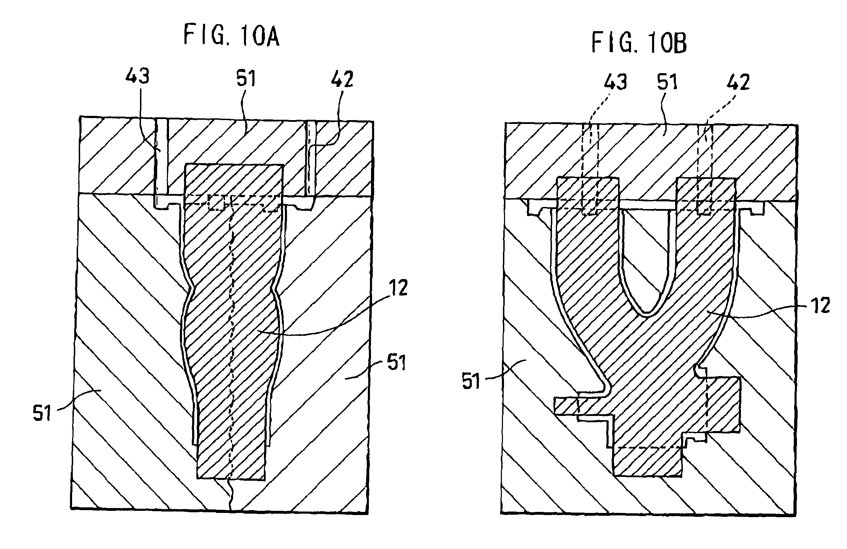

Then, as shown in FIGs. 10A and 10B, the vanishing core (D) 12 is set in the mold for resin model (E) 51, the two-component reaction rapid curing type urethane liquid resin (F) 32 in a container 30 is injected in the same manner shown in FIG. 7. A block combined the vanishing core (D) 12 and the resin model (G) 1 is taken out by taking out the mold for resin model (E) 51 and breaking up the mold for resin model (E) 51.

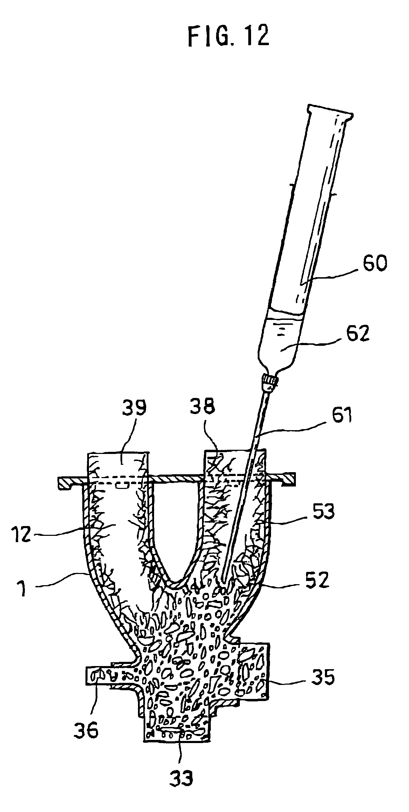

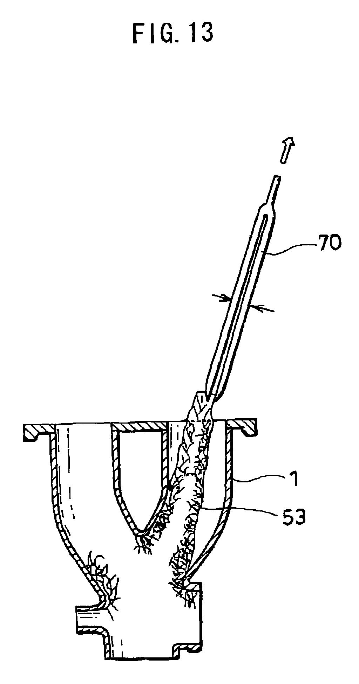

The block is as shown in FIG. 12. Organic solvent capable of dissolving the foamed polystyrene (H) 62 is injected to the block by means such as injector 60 to dissolve the foamed polystyrene fine particles (B) 52 constituting the vanishing core (D) 12. And then, as shown in FIG. 13, the cured matter (I) 53 of the two-component reaction curing type soft urethane liquid resin (A) which is stayed behind therein is taking out and removed by tweezers 70, resulting that the resin model (G) 1 is gained.

Next, detail for components of every model is explained.

The two-component reaction curing type soft urethane liquid resin (A) consists of a polyol component (a) and a polyisocyanate component (b).

The polyol component (a) may be a low molecular polyol, a polyether polyol, an amine polyol, polyester polyol, an acrylic polyol, or a polybutadiene polyol and so on. Castor oil and its derivatives may be used as a special.

Ethylene glycol, propylene glycol, 1-4 butanediol, glycerine, trimethylolpropane, pentaerythritol, etc. is mentioned as the low molecular polyol.

The polyether polyol may be a polyether polyol, etc. with various molecular weights obtained by adding ethylene oxide or propylene oxide into the low molecular polyol. Hydroxyl group terminal may be primary or secondary by various blending systems such as addition by only ethylene oxide, additional by only propylene oxide, addition by mixture, addition in sequence, etc. Various types of polyether polyol with ethylene oxide and propylene oxide rendering diverse hydrophilic or hydrophobic properties in their additional chains can be achieved by varying reactivity of the hydroxyl group terminal through different blending methods. Besides, polytetramethylene ether glycol obtained through cationic polymerization of THF, which is often referred to as PTMG, may be used.

The amine polyol is a substance achieved by adding ethylene oxide or propylene oxide to a low molecular amine such as ammonia, ethylene diamine, or polyethylene polyamine. Thus, the amine polyol, which contains tertiary nitrogen within its molecule, is a polyol retaining an effect of promoting reaction of isocyanate. The amine polyol containing ammonia as a starter is trifunctional, the amine polyol containing the ethylene diamine as a starter is quadrafunctional and the amine polyol containing polyethylene polyamine as a starter is multifunctional more than four functions.

The polyester polyol may be condensed polyester polyol having a hydroxyl group constituting a molecular terminal achieved by esterifying a dibasic acid and a low molecular polyol. By selecting specific types of dibasic acid and low molecular diol/triol, adjusting the molecular weight and using a small quantity of a multifunctional low molecular polyol, diverse types of polyester polyol can be prepared. The dibasic acid which is often used to prepare a condensed polyester polyol is adipic acid. The low molecular diol may be ethylene glycol, propylene glycol, 1-4 butanediol or the like, whereas the low molecular triol may be glycerine, trimethylolpropane, or glycerin or trimethylolpropane containing small quantity of alkylene oxide. In addition, the functional radix and the molecular weight of an _-caprolactam ring-opening polymerization type polyester polyol can be adjusted by controlling the ring-opening polymerization starter type and the quantity of the starter used for the ring-opening polymerization. There are matters having polyester chains and polyether chains by adding alkylene oxide to them, or there are also matters having much variety. Besides, there is also a carbonate diol obtained by opening the ring of ethylene carbonate.

The acrylic polyol is that an acrylic monomer containing a hydroxyl group terminal is polymerized in methyl acrylate or methyl meta-acrylate, and is an acrylic oligomer having a plurality of hydroxyl groups in an acrylic chain. Various kinds of acrylic polyol formed by selecting specific kinds of acrylic monomer and adjusting their molecular weight are marketed. A liquid resin whose polymerization degree is increased to the level at which film formation is enabled to have a high molecular weight and which is dissolved in an organic solvent is a paint with superior weather resistance due to slight cross-linking induced by aliphatic polyisocyanate.

The polybutadiene polyol is a copolymer consisting of butadiene containing a hydroxyl group at a terminal thereof and a compound having double bonds. It is a polyol with a relatively high level of hydrophobic property.

An urethane modified polyol with a hydroxyl group terminal obtained by joining thus multifunctional polyol via polyisocyanate may be used as well. In such a case, viscosity tends to increase since the molecular weight increases slightly due to oligomerization resulting from the urethane modification.

One of the multifunctional polyols listed above may be used by itself, or two or more multifunctional polyols may be used in combination. Under normal circumstances, the molecular structure is designed by blending various kinds of multifunctional polyol constituents in specific quantities in order to satisfy numerous requirements corresponding to a given purpose of use. Such a multifunctional polyol component (a) includes an active hydroxyl group at a molecular terminal and its reactivity with isocyanate is different by the kind of hydroxyl group at the molecular terminal.

In particular, polyether polyols and polyester polyols have high levels of affinity with water and also contain minute quantities of water. Such extremely low water contents do not cause any concern as long as the polyols are used in aqueous foamed urethane. However, if they are used in non-foamed urethane, it is necessary to rigorously carry out reduction control of the minute quantities of water. For this reason, the multifunctional polyol component (a) is manufactured through heating, mixing and dehydrating progresses.

Because the polyol component (a) is an ingredient of the two-component reaction curing type soft urethane liquid resin (A), it is constituted of a soft polyol component group. The soft polyol component group is that is mainly constituted of polyether polyol group with molecular weights 1000 to 2000 and average functions 2 to 2.3.

The polyisocyanate component (b) is a compound containing two or more isocyanate groups in a single molecule thereof, and the polyol component (a) is to contain two or more a hydroxyl groups in a single molecule thereof. The isocyanate groups are functional groups with an extremely high level of reactivity, and react with hydroxyl groups containing active hydrogen, amino groups or thiol groups. Since the amino groups or the thiol groups react instantaneously, they are limitedly applied to less reactive isocyanate components or less reactive aromatic amines, but they still react fairly quickly, so that such a combination is not commonly used.

The polyisocyanate component (b) may be an aromatic polyisocyanate, an aliphatic polyisocyanate, or an alicyclic isocyanate. Typical examples of the aromatic polyisocyanate include tolylene diisocyanate and diphenylmethane diisocyanate. The tolylene diisocyanate is obtained as a mixture of various isomers in chemical reaction at production, and various industrial products with varying mixing ratios of 2,4-body and 2,6-body, e.g., TDI-100 (2,4-TDI 100%), TDI-80 (2,4-TDI 80%, 2,6-TDI 20%), TDI-65 (2,4-TDI 65%, 2,6-TDI 35%), are marketed. The diphenylmethane diisocyanate is obtained as a mixture of various isomers in chemical reaction at production, being pure MDI and polymeric MDI in industrial applications. The pure MDI is a dicaryonic, whereas polymeric MDI is a multicaryonic. While the pure MDI is insolated through distillation, the polymeric MDI is obtained as residue. Since the number of muticaryons in the polymeric MDI changes under different manufacturing conditions, various types of polymeric MDI are marketed from numerous manufacturers. In addition, other examples of the aromatic polyisocyanate include naphthalene diisocyanate that an isocyanate group is added to a naphthalene nucleus or tolidine diisocyanate. Examples of the aliphatic polyisocyanate include hexamethylene diisocyanate, isophorone diisocyanate, xylylene diisocyanate, and lysine diisocyanate. The alicyclic polyisocyanate may be hydrogenated xylylene diisocyanate obtained by hydrogenating xylylene diisocyanate, or hydrogenated MDI obtained by hydrogenating MDI.

Because the polyisocyanate is generally highly reactive and especially volatile polyisocyanate is highly toxic, they are normally used after undergoing various types of metamorphisms. Such a metamorphism may be urethane modification, dimerization, trimerization, polycarbonimidization, urea modification, pre-polymerization, blocking and so on. These are to leave an isocyanate group at a terminal thereof by inducing self condensation by using higher reactivity of the isocyanate group or by joining it via an active component.

Since the polyisocyanate component (b) is an ingredient of the two-component reaction curing type soft urethane liquid resin (A), it is constituted of a soft polyisocyanate component group. The soft polyisocyanate component group is that NCO % is within 6 to 20 %, preferably a polyisocyanate component whose NCO % is within 6 to 20%. This is a terminal NCO urethane polymer.

Loadings of the polyol component (a) and the polyisocyanate component (b) are designed by calculating NCO radix and OH radix, for instance, being designed so that NCO/OH ratio of the NCO radix and the OH radix is set to a value close to 1.0 in the case of non-foamed urethane. In the case of NCO/OH=1.0, the number of isocyanate groups and the number of hydroxyl groups are equal to each other, so that both types of the groups are all used in the reaction. In other words, it is a setting at which maximum strength thereof is realized.

The two-component reaction curing type soft urethane liquid resin (A) may be two-component reaction curing type soft foamed urethane liquid resin or two-component reaction curing type soft non-foamed urethane liquid resin. In the case of the two-component reaction curing type soft foamed urethane liquid resin, a foaming agent and a foam stabilizer are mixed to the polyol component (a). In the case of the two-component reaction curing type soft non-foamed urethane liquid resin, an anti-foaming agent is mixed to the polyol component (a).

The two-component reaction curing type soft urethane liquid resin (A) consists of the polyol component (a) and the polyisocyanate component, and hardness of a resulting cured matter thereof is set within Shore hardness A from 60 to 95. If the hardness of the cured matter is less than Shore hardness A 60, tensile strength thereof is decreased, so that the cured matter (I) 53 of the two-component reaction curing type soft urethane liquid resin (A) is broken and difficult to take out and remove it in the process for taking out and removing the cured matter (i) 53 of the two-component reaction curing type soft urethane liquid resin (A) from the opening of the complicated shaped resin model (G) 1. If the hardness of the cured matter exceeds Shore hardness A 95, a needle 61 of the injector 60 is difficult to pass through smoothly when the organic solvent capable to the foamed polystyrene (H) is injected from the needle 61 of the injector 60 into the vanishing core (D) 12 exposed on the opening of the resin model (G) 1. Due to thus workability, the two-component reaction curing type soft urethane liquid resin (A) is that the hardness of the cured matter is set within Shore hardness A 60 to 95. The hardness is preferably within 65 to 95. The extent of the hardness is an extent of a soft urethane.

As a catalyst that promotes chemical reaction of the polyol component (a) and the polyisocyanate (b), a metal catalyst or an amine catalyst may be used. As the metal catalyst, octylic zinc, octylic lead, dibutyltin dilaurate, dibutyltin acetate and the like can be listed up. As the amine catalyst, triethylene diamine, NN-dimethyl piperazine, N-methyl morpholine and the like can be listed up. The catalyst normally added into the polyol component. Under normal circumstances, 1 to 1000 ppm of catalyst is added to the polyol component (a) to adjust working time thereof. The working time is adjusted so as to be within 5 to 20 minutes.

The foamed polystyrene fine particles (B) may be spherical polystyrene beads used as a cushioning material for packing or matters that wastes of foamed polystyrene cushioning products or foamed styrene trays used in a market is crushed by dry grinding or elutriation.

For elutriating the wastes of the foamed styrene products, for instance, a way that liquid composition is taken into a mixer providing blades for mixing and cutting, crushed pieces of the wastes are added into the mixer, and a resulting mixture is rotated at high speed is adopted. Thus, broken particles of the wastes can be the mixture with the liquid composition without scattering. Water, a plasticizer, a simple substance of polyol, a mixture of polyol, etc. is listed up as the liquid composition.

The organic solvent capable of dissolving the foamed polystyrene (H) may be an inert organic solvent without active hydrogen and is capable of dissolving polystyrene. For instance, styrene, alkyl styrene, methylene chloride, limonene (the products of Yasuhara Chemical Co., Ltd.) etc. is available. By mixing a little amount of the organic solvent capable of dissolving the foamed polystyrene (H) to the two-component reaction curing type soft urethane liquid resin (A), because an effect that surfaces of the foamed polystyrene fine particles (B) are dissolved is developed so that floating of the foamed polystyrene fine particles (B) is delayed largely, as a result, the condition that the foamed polystyrene fine particles (B) are dispersed in a whole system can be gained. Loading of the organic solvent capable of dissolving the foamed polystyrene (H) is within 1 to 5 wt% relative to the foamed polystyrene fine particles (B).

A particle size of the foamed polystyrene fine particle (B) is within 0.01 to 5.0 mm. If the particle size is not less than 5.0 mm, liquid for casting which is a mixture gained by mixing the two-component reaction curing type soft urethane liquid resin (A) and the foamed polystyrene fine particles (B) may be difficult to be flown smoothly, so that the injection to the mold for core (C) 50 becomes difficult.

Loading of the foamed polystyrene fine particles (B) is within 0.1 to 5.0 wt% relative to the two-component reaction curing type soft urethane liquid resin (A). If the loading is more than 5.0 wt%, liquid for casting which is a mixture gained by mixing the two-component reaction curing type soft urethane liquid resin (A) and the foamed polystyrene fine particles (B) may be difficult to be flown smoothly, so that the injection to the mold for core (C) 50 becomes difficult. If the loading is less than 0.1 wt%, vanishing amount of the vanishing core (D) 12 by dissolution is decreased while taking out and removing amount of the vanishing core (D) 12, so that working for taking out and removing it becomes difficult.

A metal mold, a simple metal mold, a resin mold, a silicon rubber mold, etc. can be available to the mold for core (C) 50. However, the silicon rubber mold affected with foaming pressure at the working is not available. When the two-component reaction curing type urethane liquid resin (A) is used, a metal mold, a simple metal mold, a resin mold, and silicon rubber mold can be applied. Besides, a metal mold and a simple metal mold are available to mass production and a resin mold and a silicon rubber mold are available to a small-lot production.

The two-component reaction fast curing type urethane liquid resin (F) consists of a multifunctional polyol component (c), a multifunctional polyisocyanate component (d), a plasticizer (e) and wax solid minute particles (f), wherein the plasticizer (e) is micro-dispersed through phase separation when it is hardened rapidly.

The multifunctional polyol component (c) is the same as the above described polyol component (a) basically. Note that the function in this case is set on not less than 3.2. Accordingly, a mixture that contains 3-functional polyol or 4-functional polyol mainly and combines 2-functional polyol is used.

The multifunctional polyisocyanate component (d) is the same as the above described polyisocyanate component (b) basically. Note that the function in this case is set on not less than 2.3. Accordingly, a mixture that contains more than 2-functional polyisocyanate mainly and combines 2-functional polyisocyanate is used.

The plasticizer (e) is an inactive chemical compound having no functional group that induced a chemical reaction with volatility insignificant enough to be disregarded, and is in liquid form at room temperature. The plasticizer (e) may be plasticizing ester, plasticizing ether, and plasticizing ester/ether. Concretely, typical examples of the plasticizing ester are dioctyl adipate (DOA), dioctyl phthalate (DOP) and dibutyl phthalate (DBP). Alternatively, benzyl acetate, benzoic butyl, benzoic octyl, benzoic isopentyl, ethylene glycol benzoic diester, polyethylene glycol benzoic diester, propylene glycol benzoic diester, polypropylene glycol benzoic diester, ethylene glycol dioleate, polyethylene glycol dioleate, propylene glycol dioleate, and polypropylene glycol dioleate, etc. are listed up. Examples of the plasticizing ether include ethylene glycol dibutyl ether, ethylene glycol diphenyl ether, diethylene glycol dimethyl ether, diethylene glycol methyl ethyl ether, diethylene glycol diethyl ether, diethylene glycol ethyl butyl ether, diethylene glycol dibutyl ether, triethylene glycol dimethyl ether, triethylene glycol diethyl ether, triethylene glycol dibutyl ether, tetraethylene glycol dimethyl ether, tetraethylene glycol diethyl ether, etc. Examples of plasticizing ethyl/ester include ethylene glycol mono butyl ether acetate, diethylene glycol mono ethyl ether acetate, diethylene glycol monobutyl ether acetate, diethylene glycol mono phenyl ether acetate, etc.

Loading of the plasticizer (e) is within 2 to 20 wt% relative to the two-component reaction fast curing type urethane liquid resin (F). If the loading of the plasticizer (e) exceeds 20 wt%, the plasticizer (e) bleeds over a surface of the resin model to cause stickiness or tack. If the loading of the plasticizer (e) is less than 2wt%, thermally decomposed and melted resin becomes difficult to flow out during dewaxing and sintering processes, because the plasticizer (e) is in liquid form at room temperature but becomes low-viscosity easy to flow out at high temperature. It is preferred that the plasticizer (e) is contained as much as possible in order to exhibit thus effect strongly. As described above, when the plasticizer is contained much in a resin component, the plasticizer bleeds over a surface of the cured matter to cause the tack or the stickiness thereon. Therefore, as a result that it was studied that the plasticizer (e) is contained at a maximum content thereof, it is found that a condition in which the plasticizer (e) is undergone phase separation from the cured resin and trapped in a micro dispersed condition within a three-dimensional network structure by rapidly hardening the resin within 5 minutes of the working life is available.

Such phase separation micro dispersion can be regarded as a state in which the plasticizer (e) is enclosed by the cored resin assuming a honeycomb structure. The cured resin assuming the honeycomb structure has superior physical strength, and the honeycomb structure can also regarded as a three-dimensional structure within which the plasticizer (e) is secured within the honeycomb and is not allowed to be released outside thereof. The structure does not allow the plasticizer (e) to bleed over the surface of the cured matter to induce tackiness even when the plasticizer (e) is contained at a relatively high ratio. If the phase separation micro dispersion structure is not adopted, the plasticizer is dissolved into the cured matter, and once it reaches the saturation level, the plasticizer becomes bled over the surface of the cured matter to result in tackiness. If the extent of the bleeding is significant, the surface becomes sticky. The phase separation micro dispersion structure can be observed through an electron microscope. It is necessary to harden the resin rapidly within 5 minutes of the working life in order to assist the formation of the phase separation micro dispersion structure. Especially, the working life is preferably within 3 minutes. If the working life exceeds 5 minutes, the process of phase separation micro dispersion cannot be completed with ease, and since it will take a day or more to disengage the model during the model production, the model production will become an extremely slow process.

When the plasticizer (e) is contained in the two-component reaction fast curing type urethane liquid resin (F), it needs to be uniformly dissolved in the liquid resin, whereas the phase separation micro dispersion of the plasticizer from the cured resin is promoted during the reactive hardening stage, and the micro dispersed plasticizer is trapped to prevent from bleeding to the surface at the time when the reactive hardening is completed. The composition is constituted on thus delicate balance. Namely, the composition must be designed within the range that balance between hydrophilic and hydrophobic properties of the plasticizer (e) and the reaction curing resin is adjusted well. An alkylene oxide chain is available as a hydrophilic segment, and a hydrocarbon chain is available as a hydrophobic segment. The properties of the hydrophilic segment and the hydrophobic segment are determined by selecting a specific type of raw monomer. A certain degree of dissociation should be assured with regard to the balance between the hydrophilic property and the hydrophobic property. If the two-component reaction fast curing type urethane liquid resin (F) contains a large number of ethylene oxide chains, the hydrophilic property becomes more pronounced, whereas if the ethylene oxide chains are replaced with propylene oxide chains, the level of hydrophilic property is weakened rather than the case of using the ethylene oxide chains. If ethylene oxide chains or propylene oxide chains are used in a smaller quantity, the hydrophobic property of the two-component reaction fast curing type urethane liquid resin (F) becomes more pronounced. Thus, the hydrophilic property and the hydrophobic property can be adjusted within a certain range. In addition, by adjusting the type and quantity of the plasticizer (e), the hydrophilic property and the hydrophobic property of the plasticizer itself can be adjusted within a certain range. For instance, if a terminal of the plasticizer is constituted with alkyl ether, the level of the hydrophobic property increases as it changes to methyl ether, ethyl ether, butyl ether, phenyl ether in turn. Thus, the range over which the phase separation micro dispersion is achieved is set by changing loading and a chemical structure of the plasticizer (e) and/or loading and chemical structure of the two-component reaction fast curing type urethane liquid resin (F). The desirable phase separation micro dispersion can be achieved by setting the hydrophobic property of the plasticizer (e) to a relative high level, and setting the hydrophilic property of the resin component to a relative high level through the method described above.

Next, the wax solid minute particle (f) used in the present invention is explained.

The wax solid minute particle (f) is a nearly nonvolatile inactive chemical compound having no functional groups that induce a chemical reaction, and a solid substance manifesting crystallization at room temperature. The wax solid minute particle (f) may be a natural wax that is found in the natural world or a synthetic wax obtained through synthesis. The natural wax is most commonly found in candles. A chemical composition of the natural wax consists of higher fatty acid and higher alcohol, referring as wax ester. The number of carbons in the higher fatty acid and higher alcohol is not less than 16 mainly. Since it is an ester compound, it has a small residual acid value, namely it contains residual free fatty acids. In addition, since the natural wax includes numerous types of saturated and unsaturated higher fatty acids, certain type of wax contain unsaturated higher fatty acids or hydroxyl acid as well. These waxes have chemical structures close to that of paraffin and are crystallized or uncrystallized solid substances at room temperature. Their melting points are normally approximately 80 °C. Typical examples of waxes include candela wax, carnauba wax, rice wax, bees wax, whale wax, montan wax, lanolin wax, alpha wax, cork fiber wax, sugarcane wax, wood wax, sumac wax, micro crystalline wax, earth wax, etc. The examples of synthetic wax include polyethylene wax, wax obtained through Fischer-Ttopsch synthesis, waxy copolymers and their esters, wax obtained by adding hydrogen as a catalyst to C₈ - C₃₂ to animal / plant oil or edible oil having straight or branched fat chains, silicon wax, fluorine containing wax, etc. These wax substances may be used individually or in combination, or a wax component containing a third constituent may be used. The wax solid minute particle (f) manifests a pronounced paraffin or olefin property, has a high level of hydrophobic property and is in a solid state at room temperature. Thus, it does not readily become dissolved into the multifunctional polyol component (c), the multifunctional polyisocyanate component (d) or the plasticizer (e). Therefore, it does not readily become dissolved when it is mixed in the two-component reaction fast curing type urethane liquid resin (F) and mostly remains suspended in the liquid system. As the two-component reaction fast curing type urethane liquid resin (F) becomes rapidly curing in this state, the wax is enclosed in a solid state within the resin achieving the three-dimensional network structure consequently. Thus, the resin model according to the present invention has specificity such that none of the problems of the conventional wax model can be arisen since the wax solid minute particles (f) are not directly exposed at the surface thereof. Though particles themselves of the wax solid minute particles (f) do not form the surface of the model directly, there is a possibility such that a very small quantity of the melted wax solid minute particles (f) is bled to the surface of the model. The wax solid minute particles (f) are highly effective in accelerating the flowing out of the resin constituents which have become softened, thermally decomposed and melted by heating during the dewaxing / sintering processes.

Loading of the wax solid minute particles (f) is within 1 to 20 wt% relative to the two-component reaction fast curing type urethane liquid resin (F). If the loading is not more than 1 wt%, an effect of dewaxing by using the wax solid minute particles (f) is disappeared. If the loading exceeds 20wt%, fluidity of the two-component reaction fast curing type urethane liquid resin (F) becomes poor and operability of the resin model production is compromised. In addition, strength of the resin model itself is decreased to increase possibility for cracking or breaking during disengaging. Accordingly, the loading is within 5 to 20 wt%, preferably within 10 to 15 wt%. The wax solid minute particle (f) is used in the form of grains, flakes or lumps in a size small enough to be contained within a 1 cm³ cube. Such wax grains or lumps may assume a roughly spherical shape, a roughly cubic shape or an irregular shape. In other words, the shape is not limited to true sphere or cubes. Their sides should be small enough to be contained in a 1 cm³ cube. Their diameters are preferably not more than 1mm. These wax solid minute particles naturally do not flow into any portion of the model with a wall thickness less than 1mm. While this prevents uniform distribution of the wax solid minute particles (f) in the model, it does not pose a problem as long as the casting mold can be manufactured and a high precision cast product is produced by assuring high levels of model shape retention and dimensional accuracy, smooth thermal decomposition, fusion and flowing-out and a minimum quantity of residual ash resulting from high temperature decomposition. The wax solid minute particles are allowed to flow into portions of the model with a wall thickness more than 1mm. Since unhardened liquid resin is also naturally allowed to flow into these portions with ease, a model with a resin component distributed evenly throughout entirely thereof can be disengaged from the model. In a sense, the wax solid minute particles (f) flowing into the portions of the model with large wall thickness in great quantities is advantageous. Namely, the melting / flowing-out / decomposition / burning tends to be slowed down in thick portions of the model during the dewaxing / sintering processes. When the wax solid minute particles (f) flow into the thick portions in relatively large quantities and are fixed by the cored resin, an effect that the melting / flowing-out / decomposition / burning can be assisted well during the dewaxing / sintering processes is appeared.

Various kinds of additives are added to the two-component reaction fast curing type urethane liquid resin (F). The examples of the additives include an organic solvent, a reaction accelerating catalyst, an anti-foam agent, an anti-oxidizing agent, a coloring matter, a flammable filler, etc., which do not prevent burning quality and do not remain as ash contents.

Since the organic solvent mentioned here is different from the organic solvent capable of dissolving the foamed polystyrene (H) in their contents, the explanation is added as follows. The above mentioned organic solvent capable of dissolving the foamed polystyrene (H) is to be added in order to prevent the foamed polystyrene fine particles (B) from floating by dissolving and expanding the surface of the particles slightly. In other hands, the organic solvent mentioned here is to be added in order to decrease flowability of the two-component reaction fast curing type urethane liquid resin (F) and to increase the workability. Accordingly, these are distinguished each other in the terms which are "organic solvent" and "organic solvent capable of dissolving the foamed polystyrene (H)".

An inactive organic solvent which does not chemically react with isocyanate is selected as the organic solvent mentioned here. Examples of the inactive organic solvent include an aromatic organic solvent, an ester organic solvent, an ether organic solvent, an aliphatic organic solvent, and a chlorine-based organic solvent, etc. The requirements that the organic solvent must satisfy are that: it dissolves the multifunctional polyether (c), the multifunctional polyisocyanate (d) and the plasticizer (e), it has a mild odor, it does not generate any toxic gas when it is burned, and it is economical. The organic solvent satisfying such requirements should be preferably an aromatic organic solvent such as toluene or xylene.

The organic solvent is in a condition so as to be trapped in the model at a stage in heating and gelling of the two-component reaction fast curing type urethane liquid resin (F) in small quantities. In addition, the organic solvent remains inside the thick portions of the model which is more than 1 mm and difficult to burn, so that an effect that it assists burning at the dewaxing and the sintering processes. It also achieves a great advantage in that it lowers viscosity of the resin to improve operability of the model production.

The reaction accelerating catalyst, the anti-foam agent, the anti-oxidizing agent, and the coloring matter which are added to the two-component reaction fast curing type urethane liquid resin (F) are mentioned above.

The flammable filler which does not decrease flammability largely and does not remain as ash contents is used. It is available that the flammable filler contains hollow resin balloons and/or carbon powders within 1 to 10 %. The hollow resin balloons are light impalpable powders with absolute specific gravities within 0.15 - 0.50 g/cc and particle diameters within 15 - 100 µm, and are marketed as UCAR Phenolic Micro balloon (Union Carbide Co. Ltd.) or as Matsumoto Micro sphere (Matsumoto Oil and Fat Pharmaceutical Co. Ltd.). Containing thus hollow resin balloons means that air is embedded in the resin model, so that an effect that decomposition, flowing-out and burning are promoted in the dewaxing and sintering processes to decrease residual ash contents is appeared. Content of the hollow resin balloons is within 0.05 - 5.0 wt% relative to the resin model. It the content is more than 5.0 wt%, the two-component reaction fast curing type urethane liquid resin (F) becomes rough, and it is difficult to gain the smooth flowability. Accordingly, the content is preferably within 0.1 - 0.5 wt%.

For the cured matter (I) 53 of the two-component reaction curing type soft urethane liquid resin (A), what resin composition is available to the vanishing model used in the precision mold is pursued, so that it is proposed that the resin composition within a limited extent is available as the vanishing model. Shortage of strength which is a fault of the wax model is improved surely by using the resin model. To be accompanied with economy, the resin model must be produced as quickly as possible. Because the resin model is not related to mass production from the beginning, it is important in industrialization that small amount and various kinds of resin models can be produced promptly. Therefore, the resin compositions as the vanishing model within the extent of the reaction curing type resins which can be cured fast, but not the injection system using a metal mold or a thermoplastic resin, was examined.

On the other hand, if the hardened resin is extremely hard, the melting, decomposition, flowing-out and burning are delayed at heating for the resin model to be damaged due to breaking of the casting mold by expansion of the resin itself. Accordingly, it is necessary to soften the whole hardened resin model fast and to disperse expanding stress of the resin to the gate and the air bleeder. For this reason, it is found that hardness at 80 °C of the vanishing resin model which is a cured matter is available within 20 - 55 in Shore D hardness scale, preferably within 30- 50. If the hardness at 80 °C is more than 55 in Shore D hardness scale, moderation of the expansion stress in the resin model becomes worse and the stress cannot be dispersed to the gate and the air bleeder, so that the casting mold is broken by expanding the resin model. If the hardness at 80 °C is less than 20 in Shore D hardness scale, the hardness of the resin model at summer temperature becomes less than 40 in Shore D hardness, shortage of the hardness is caused in the demolding process at the resin model production, so that the resin model is deformed by the forced demolding stress.

Thus, setting of the resin composition for the vanishing model is related mutually with a quantity of the resin and a framework, a speed of hardening, a melting / flowing-out / burning component of the plasticizer component and the wax component, hardness of the cured matter, foaming control, etc., so that balanced availably applicable range are found, resulting that the two-component reaction curing type urethane liquid resin (A) is introduced. By applying the method for producing the integrally molded seamless resin model by using the two-component reaction curing type urethane liquid resin (A), aimed resin model for precision mold can be created.

Under thus background, the present invention proposes a new method for producing a seamless complicated shaped integral forming resin model based on the production of a new core.

### INDUSTRIAL APPLICABILITY

Recently, requirement levels to accuracy of precision molding parts and to complicated shapes have become increase. A demand for titan precision molding products whose melting metals are titan alloys is increased rapidly in specific industrial fields because they make use of superior characteristics in weight saving, high strength, high heat resistance and high corrosion resistance. Furthermore, special parts in an automobile parts field, a jet engine parts field, a nuclear energy parts field, a heat exchanging parts field, and space exploitation rocket parts field are designed so as to be able to achieve complicated shapes and high dimensional accuracies, and further higher levels of an engineering development than prior arts are required.

Even if the high level of parts' design is developed, if precision parts faithful to the designs thereof can not be produced, there is no sense. It is important to increase precision molding technology with complicated shapes and high dimensional accuracy. One of key techniques for the lost wax precision molding is a model after all. It is difficult technologically for the lost wax precision molding using the prior wax models to correspond to the high requirements. Namely, it is limited technologically by itself to produce complicated and high accuracy model with a wax component which is fragile.

Accordingly, in the present invention, required precision moldings are produced by forming high accuracy vanishing models by using the core system skillfully by the resin model including a wax component

It is sure that the present invention can contribute development of an automobile industry, an airplane industry and a space development industry by making an integral molding complicated shaped resin model production technology practicable.

## Claims

1. A method for integrally forming a resin model with a complicated shape and a complicated hollow portion inside thereof:
a process for combining foamed polystyrene fine particles (C) to two-component reaction curing type soft urethane liquid resin (A), injecting a resulting mixture into a mold for core (C) with a concave portion corresponding to said hollow portion, hardening it, removing a resulting cured matter from said mold for core (C), and forming a vanishing core (D) having a shape corresponding to said hollow portion;
a process for setting said vanishing core (D) at a specific position inside a mold for resin model (E) having a concave portion corresponding to an outer shape of said resin model, injecting two-component reaction fast curing type urethane liquid resin (F), hardening it, removing a resulting cured matter, and forming a resin model (G) including said vanishing core (D); and
a process for injecting organic solvent capable of dissolving foamed polystyrene (H) into said vanishing core (D of said resin model (G) to dissolve said foamed polystyrene fine particles (B), removing a resulting solution, taking out and removing a cured matter (I) of said two-component reaction curing type soft urethane liquid resin (A), and completing said resin model.

2. A method for integrally forming a resin model according to claim 1, wherein said two-component reaction curing type soft urethane liquid resin (A) consists of a polyol component (a) and a polyisocyanate component (b) and contains said organic solvent capable of dissolving foamed polystyrene (H) within 0.01 to 5.0 wt%, and hardness of said cured matter (I) is within 50 to 95 in Shore hardness A.

3. A method for integrally forming a resin model according to claim 1 or 2, wherein said foamed polystyrene fine particles (B) is formed by breaking wastes of foamed polystyrene products, diameters of said particles are within 0.01 to 5.0 mm, loading of it is within 0.1 to 5.0 wt% relative to said two-component reaction curing type soft urethane liquid resin (A).

4. A method for integrally forming a resin model according to claim 1, 2 or 3, wherein said two-component reaction fast curing type urethane liquid resin (F) consists of a multifunctional polyol component (c), a multifunctional polyisocyanate component (d), a plasticizer (e) and wax solid minute particles (f), and said plasticizer (e) is micro-dispersed through phase separation when it is hardened rapidly.

5. A method for integrally forming a resin model according to any one of claims 1 to 4, wherein said resin model is used as an alternative of a wax model for a lost wax precision molding.
